# EUROPÄISCHE PATENTSCHRIFT

(11) **EP 0 735 109 B1**
(45) Veröffentlichungstag und Bekanntmachung des Hinweises auf die Patenterteilung: **23.08.2000**
(21) Anmeldenummer: 96104207.4
(22) Anmeldetag: 16.03.1996
(51) Int. Cl.: C09B 67/20, C08G 65/28

(54) **Wässrige Pigmentpräparationen**
Aqueous pigment preparations
Préparations pigmentaires aqueuses

(30) Priorität: 30.03.1995 DE 19511624
(43) Veröffentlichungstag der Anmeldung: 02.10.1996
(73) Patentinhaber: BAYER AG, 51368 Leverkusen (DE)
(72) Erfinder: Brand, Achim, 51105 Köln (DE); Leitermann, Josef, 51373 Leverkusen (DE); Nyssen, Roger, 41542 Dormagen (DE); Schubert, Klaus, 51061 Köln (DE); Schuffenhauer, Erhard, 51373 Leverkusen (DE); Wieser, Karlheinz, Dr., 51375 Leverkusen (DE); Wigger, Herbert, 51371 Leverkusen (DE)

(56) Entgegenhaltungen:
- EP-A- 0 497 172
- DE-A- 2 711 240
- DE-A- 2 730 223
- DE-A- 2 732 732
- DE-A- 3 641 677
- DE-B- 1 121 814
- US-A- 4 436 522
- CHEMICAL ABSTRACTS, vol. 95, no. 12, 21.September 1989 Columbus, Ohio, US; abstract no. 99276r, "Dye dispersing agents for printing textiles" Seite 69; Spalte 2; XP000006001 & JP 56 058 077 A (SANYO CHEMICAL INDUSTRIES, LTD.)

## Beschreibung

Die Erfindung betrifft wäßrige Pigmentpräparationen, ein Verfahren zu ihrer Herstellung sowie ihre Verwendung zum Pigmentieren natürlicher und synthetischer Materialien.

Wäßrige Pigmentpräparationen, wie sie in DE-A-36 41 677 explizit beschrieben sind, enthalten neben Wasser und Pigment im wesentlichen:
- ein Oxalkylierungsprodukt, das durch Anlagerung von Styrol an Phenol und Umsetzung mit Ethylenoxid erhalten wird und
- flüchtige Lösungsmittel wie Glykole beispielsweise Propandiol-1,2, Monoethylenglykol und/oder Diethylenglykol.

Diese Pigmentpräparationen weisen jedoch noch gewisse anwendungstechnische Nachteile auf. Gemäß US-A 4 436 522 werden Dispersionsfarbstoffpräparationen offenbart, die neben einem Dispersionsfarbstoff auch ein Kondensationsprodukt von Styrol und Phenol und nachfolgender Oxalkylierung mit Ethylenoxid enthalten. Als weiteren Zusatz enthalten sie explizit Ethylenglykol (s. Beispiele). Ethylenglykolhaltige Präparationen weisen jedoch eine geringe Redispergierbarkeit in Wasser nach dem Eintrocknen auf. Die vorliegende Erfindung betrifft nun wäßrige Pigmentpräparationen, enthaltend
a) 10 bis 80 Gew.-%, insbesondere 20 bis 60 Gew.-% eines Pigments,
b) 0,1 bis 20 Gew.-%, insbesondere 0,1 bis 15 Gew.-% eines Oxalkylierungsproduktes, das durch Anlagerung von gegebenenfalls substituierten Styrolen an gegebenenfalls substituierten Phenolen und Umsetzung mit Ethylenoxid und/oder Propylenoxid erhalten wird,
c) 2 bis 30 Gew.-% eines Polyetherpolyols mit einem Siedepunkt bei Normaldruck von größer 150°C, wobei als Polyetherpolyol-Komponente c) Homo-, Co- oder Block-Co-Polyetherpolyole in Frage kommen, die durch Umsetzung von Ethylenoxid und/oder Propylenoxid mit Wasser oder mit niedermolekularen Alkoholen, ausgewählt aus der Gruppe bestehend aus Ethylenglykol, 1,2- oder 1,3-Propandiol, 1,2- oder 1,4-Butandiol, Hexandiol, Glycerin oder Pentaerythrit oder mit niedermolekularen Aminen, ausgewählt aus der Gruppe bestehend aus Ethylendiamin oder Diethanolamin, hergestellt werden, und die ein als Zahlenmittel bestimmtes mittleres Molekulargewicht von 250 bis 11 000 besitzen,
d) gegebenenfalls weitere Zusätze und als Rest Wasser.

Die Pigmente, die in den erfindungsgemäßen Zubereitungen enthalten sind, unterliegen keiner Beschränkung. Sie können organischer oder anorganischer Natur sein. Geeignete organische Pigmente sind z.B. solche der Azo-, Disazo-, Polyazo-, Anthrachinon-, Thioindigo-Reihe, ferner andere polycyclische Pigmente z.B. aus der Phthalocyanin-, Chinacridon-, Dioxazin-, Naphthalintetracarbonsäure-, Perylentetracarbonsäure- oder Isoindolin-Reihe sowie Metallkomplex-Pigmente oder verlackte Farbstoffe wie Ca-, Mg-, Al-Lacke von Sulfonsäure- und/oder Carbonsäuregruppenhaltigen Farbstoffen als auch Ruße, die im Rahmen dieser Anmeldung als Pigment zu verstehen sind und von denen eine große Zahl beispielsweise aus Colour-Index, 2. Auflage bekannt sind. Insbesondere zu nennen sind saure bis alkalische Ruße aus der Gruppe Furnaceruße oder Gasruße.

Geeignete anorganische Pigmente sind beispielsweise Zinksulfide, Ultramarin, Titandioxide, Eisenoxide, Nickel- oder Chromantimontitandioxide, Cobaltblau und Chromoxide.

Besonders bevorzugt werden metallhaltige oder metallfreie Phthalocyaninpigmente, wobei die metallhaltigen insbesondere Kupfer, Cobalt oder Nickel als Zentralatom besitzen wie Kupferphthalocyaninpigmente, z.B. Color Index Pigment-Blue 15 oder Pigment-Green 7, Arylamid-Pigmente vom Disazotyp, z.B. Pigment-Yellow 83, Pigment-Yellow 17 sowie Carbon-Black 7, Zinksulfide und Ultramarine.

Als Oxalkylierungsprodukte der Komponente b) sind insbesondere solche der Formel (I) zu nennen 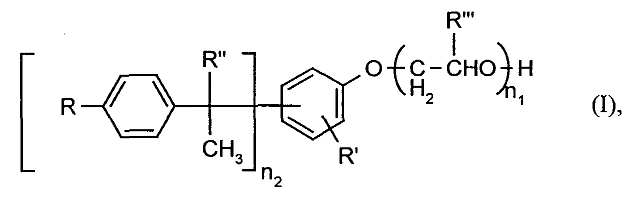 worin
- R: für Wasserstoff oder C₁-C₄-Alkyl, insbesondere Methyl, steht,
- R': Wasserstoff, C₁-C₁₂-Alkyl, insbesondere Methyl oder C₁-C₄-Alkoxycarbonyl, insbesondere Methoxycarbonyl bedeutet,
- R" und R"': unabhängig voneinander für Wasserstoff oder Methyl stehen,
- n₁: 6 bis 40 und
- n₂: 1 bis 3 bedeuten, wobei für jede der n₁-Einheiten R"' jeweils unabhängig Wasserstoff oder Methyl bedeutet.

Besonders bevorzugte Oxalkylierungsprodukte der Komponente b) lassen sich durch die folgende Formel wiedergeben 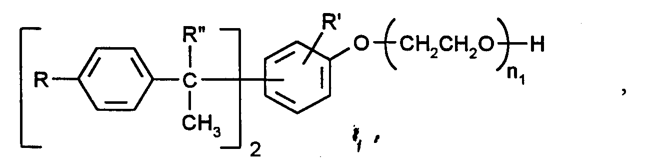 insbesondere 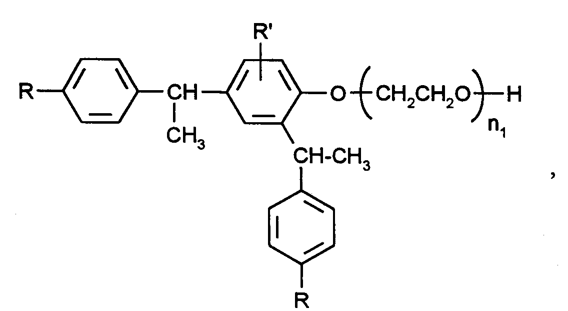 wobei
- R, R' und R": die obige Bedeutung besitzen, vorzugsweise für Wasserstoff oder Methyl stehen und
- n₁: vorzugsweise für 6 bis 30 steht.

Die Herstellung der Anlagerungsprodukte erfolgt durch Umsetzung von gegebenenfalls substituierten Styrolen mit gegebenenfalls substituierten Phenolen und anschließender Umsetzung mit Ethylenoxid und/oder Propylenoxid in bekannter Weise (siehe z.B. DE-A-11 21 814).

Besonders bevorzugte Polyetherpolyole der Komponente c) sind Polyethylenglykole und/oder Polypropylenglykole.

Besonders bevorzugte Polyetherpolyole der Komponente c) besitzen ein als Zahlenmittel bestimmtes Molekulargewicht von 250 bis 4000, insbesondere von 250 bis 1000.

Außerdem können die erfindungsgemäßen Präparationen als weiteren Bestandteil Oxalkylierungsprodukte (Komponente e) enthalten, die durch Kondensation von phenolische OH-Gruppen aufweisende Aromaten mit Formaldehyd und Aminen, die eine gegenüber Formaldehyd reaktionsfähige NH-Gruppe enthalten, erhältlich sind oder Derivate solcher Oxalkylierungsprodukte. Dabei sind solche bevorzugt, die durch Oxalkylierung von Verbindungen der Formel (II) 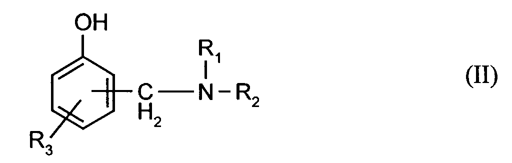 erhalten werden, worin
- R₁: den einwertigen Rest eines gegebenenfalls substituierten aliphatischen, cycloaliphatischen oder aromatischen Kohlenwasserstoffs,
- R₂: Wasserstoff oder den einwertigen Rest eines gegebenenfalls substituierten aliphatischen, cycloaliphatischen oder aromatischen Kohlenwasserstoffs und
- R₃: Wasserstoff, C₁-C₂₀-Alkyl, C₅-C₇-Cycloalkyl, Phenyl, Benzyl, Halogen, Hydroxy, C₁-C₁₈-Alkoxy, Carboxy oder C₁-C₁₈-Alkoxycarbonyl bedeuten,
wobei als Oxalkylierungsreagenzien vorzugsweise Ethylenoxid, Propylenoxid, Butylenoxid, Styroloxid, Glycid oder Mischungen dieser Verbindungen, insbesondere jedoch Ethylenoxid, gegebenenfalls zusammen mit Propylenoxid, verwendet werden. Diese Oxalkylierungsprodukte (Komponente e) werden vorzugsweise in Mengen von 0 bis 20, insbesondere 0 bis 18 Gew.-% zugegeben. Oxalkylierungsprodukte dieser Art sind beispielsweise in DE 27 11 240 beschrieben.

Weiterhin sind beispielsweise Konservierungsmittel wie Isothiazolidone beispielsweise 1,2-Benzisothiazol-3-(2H)-on, Chlor-2-methyl-4-isothiazolin-3-on oder 2-Methyl-4-isothiazolin-3-on, Pentachlorphenolnatrium, 1,3,5-Triethylolhexahydro-s-triazin oder Gemische davon zu verstehen, die im allgemeinen in einer Menge von 0 bis 1 Gew.-%, vorzugsweise 0,05 bis 0,5 Gew.-%, insbesondere 0,0001 bis 0,2 Gew.-% eingesetzt werden.

Weiterhin können die erfindungsgemäßen Präparationen weitere für Präparationen dieser Art übliche Zusatzstoffe enthalten.

Bevorzugte Pigmentpräparationen besitzen flüchtige Glykole wie Propandiol-1,2, Monoethylenglykol oder Diethylenglykol in Mengen kleiner 4 % insbesondere kleiner 1 %. Besonders bevorzugt sind Pigmentpräparationen, die im wesentlichen frei von diesen flüchtigen Glykolen sind.
Besonders bevorzugte Pigmentpräparationen enthalten mindestens 10 Gew.-% Wasser.

Die Erfindung betrifft weiterhin ein Verfahren zur Herstellung der erfindungsgemäßen Präparationen, das dadurch gekennzeichnet ist, daß man die einzelnen Bestandteile der Präparation mit Wasser in herkömmlichen Naßzerkleinerungsaggregaten, wie Knetern, Knetschnecken, Kugelmühlen, Rotor-Stator-Mühlen, Dissolvern, Korundscheibenmühlen, Schwingmühlen und insbesondere in schnellaufenden Rührwerkskugelmühlen mit Mahlkörpern in der Größe von 0,1 bis 2 mm Durchmesser homogenisiert.

Besonders bevorzugt ist dabei die Verfahrensvariante, bei der zunächst alle Komponenten bis auf das Pigment in Wasser eingetragen und in einem Dissolver homogenisiert werden. Anschließend erfolgt der Eintrag des Pigments und es wird kontinuierlich oder diskontinuierlich in einer Rührwerksmühle mit geeigneten Perlengrößen, bis zur gewünschten Feinverteilung gemahlen. Bei der kontinuierlichen Mahlung wird die Pigmentpräparation beispielsweise in einer Rührwerksmühle im Kreis gefahren, wobei ein Umlauf als Passage bezeichnet wird, oder durch eine Rührwerksmühlenkaskade geführt. Bei diskontinuierlicher Mahlung wird die Rührwerksmühle für jeden Mahlvorgang neu beschickt. Die Polyglykolether-Komponente c) kann auch ganz oder teilweise erst nach der Mahlung eingetragen werden. Auch die Zugabe des Konservierungsmittels kann vor oder nach der Mahlung erfolgen. Beispielsweise werden leicht wasserlösliche Konservierungsmittel vorzugsweise nach der Mahlung zugegeben.

Die Erfindung betrifft weiterhin die Verwendung der erfindungsgemäßen Pigmentpräparationen zum Pigmentieren natürlicher oder synthetischer Materialien.

Insbesondere sind sie geeignet zur Herstellung von Dispersionsanstrichfarben, Dispersionslacken, wasserverdünnbare Lacksysteme, wäßrige Flexo- und Tiefdruckfarben, Tapetenfarben, wäßrige Holzschutzsysteme und -Holzbeizen, Putze, sowie zum Pigmentieren von Buntstiftminen, Faserschreiber, Ink-Jet-Tinten, Tuschen, Pasten für Kugelschreiber, Kreiden, Wasch- und Reinigungsmittel, Schuhpflegemittel, Non-Woven-Vliese, Papier-Masseeinfärbungen, Papier-Streichfarben, Kartonagen-Druckfarben, Einfärbung von Latex-Produkten, Schleifmitteln, Spinnfärbungen und Folien.

Die erfindungsgemäßen Präparationen besitzen gegenüber den bereits bekannten wäßrigen Pigmentpräparationen als Vorteil eine hervorragende Dispergier- bzw. Verteilbarkeit in hydrophilen Medien.

Außerdem ist die Verträglichkeit in den verschiedenen Bindersystemen wie z.B. Latex, Polyvinylacetat, Acrylaten, Silikaten etc. deutlich verbessert.

Ein besonders hervorzuhebendes Merkmal ist die deutlich verbesserte Redispergierbarkeit von an- bzw. eingetrockneten Präparations-Anteilen.

Weiterhin besitzen sie eine sehr niedrige Antrocknungs- oder Austrocknungsneigung.

Die erfindungsgemäßen Pigmentpräparationen besitzen eine optimale Feinverteilung in der Dispersion. Viskosität, Fließverhalten und die damit notwendigen Voraussetzungen für ausgezeichnete Dosiermöglichkeiten wie z.B. mittels Pumpen werden hierdurch deutlich verbessert.

Die erfindungsgemäßen Pigmentpräparationen besitzen eine sehr hohe Farbkraft und Brillanz, eine ausgezeichnete Egalität und Deckkraft bei deckenden Anwendungen, hervorragende Transparenz bei Anwendungen in Polymeren, z.B. Folien sowie gute Fließeigenschaften. In den Präparationen lassen sich hohe Pigmentkonzentrationen erzielen. Die Präparationen lassen sich unter geringem Mahlaufwand herstellen. Beispielsweise kann bei vergleichbaren Mahlparametern in einer kontinuierlichen Perlmahlung die gewünschte Pigmentteilchengrößenverteilung in weniger Passagen bzw. unter geringerem Energieeintrag erreicht werden. Weiterhin besitzen sie eine sehr gute Lagerstabilität.

### Beispiel 1

In einem Dissolver wurde eine homogene Mischung hergestellt, bestehend aus:

48 Gew.-Teilen C.I. Pigment Rot 112,
6 Gew.-Teilen eines Oxalkylierungsproduktes der Komponente b), das durch Anlagerung von 2 Mol-Äquivalenten Styrol an 1 Mol-Äquivalent Phenol und anschließender Umsetzung mit 14 Mol-Äquivalenten Ethylenoxid erhalten wurde,
10 Gew.-Teilen Polyethylenglykol mit einem mittleren Molgewicht von 400 (Komponente c),
6 Gew.-Teilen eines Oxalkylierungsproduktes der Komponente e), das durch Umsetzung von 1 Mol-Äquivalenten Cyclohexylamin, 2 Mol-Äquivalente Formaldehyd und 1 Mol-Äquivalent Nonylphenol und anschließender Ethoxylierung mit 28 Mol-Äquivalenten Ethylenoxid gemäß DE-A-27 11 240 (Bsp. 1) erhalten wurde und
30 Gew.-Teilen Wasser.

Die Mahlung erfolgte in einer Rührwerkskugelmühle unter Kühlung, bis eine Teilchengröße von < 0,5 µm erreicht war.

Nach der Mahlung wurden 0,1 Gew.-Teile 1,2-Benzisothiazol-3-(2H)-on als Konservierungsmittel homogen eingetragen.

Man erhielt eine wäßrige Pigmentpräparation mit hervorragendem Fließverhalten bei hoher Farbstärke, geringer Antrocknungsneigung und einer hervorragenden Verträglichkeit mit handelsüblichen Anstrich-, Lack- und Textildruckfarben.

Auch bei Verwendung der nachfolgenden Konservierungsmittel oder -gemischen davon wurden vorteilhafte Präparationen gefunden: Chlor-2-methyl-4-isothiazolin-3-on, 2-Methyl-4-isothiazolin-3-on, Pentachlorphenolnatrium und 1,3,5-Triethylolhexahydro-5-triazin.

### Beispiel 2

Auf die in Beispiel 1 beschriebene Weise wurde auch die nachfolgende wäßrige Pigmentpräparation erhalten, die ebenfalls die genannten Vorteile besitzt.

Präparation, enthaltend:
32 Gew.-Teile C.I. Pigment Yellow 83
3,6 Gew.-Teile der Komponente e) aus Beispiel 1
6,4 Gew.-Teile der Komponente b) aus Beispiel 1
6,5 Gew.-Teile der Komponente c) aus Beispiel 1
51,4 Gew.-Teile Wasser
0,1 Gew.-Teile Konservierungsmittel gemäß Beispiel 1.

### Beispiel 3

Auf die in Beispiel 1 beschriebene Weise wurde auch die nachfolgende wäßrige Pigmentpräparation erhalten, die ebenfalls die genannten Vorteile besitzt.

Präparation, enthaltend:
43 Gew.-Teile C.I. Pigment Blue 15:3
4 Gew.-Teile der Komponente b) aus Beispiel 1
8 Gew.-Teile der Komponente e) aus Beispiel 1
7 Gew.-Teile der Komponente c) aus Beispiel 1
37,9 Gew.-Teile Wasser
0,1 Gew.-Teile Konservierungsmittel gemäß Beispiel 1.

### Beispiel 4

Auf die in Beispiel 1 beschriebene Weise wurde auch die nachfolgende wäßrige Pigmentpräparation erhalten, die ebenfalls die genannten Vorteile besitzt.

Präparation, enthaltend:
38 Gew.-Teile Farbruß
12 Gew.-Teile der Komponente e) aus Beispiel 1
2 Gew.-Teile der Komponente b) aus Beispiel 1
10 Gew.-Teile der Komponente c) aus Beispiel 1
37,9 Gew.-Teile Wasser
0,1 Gew.-Teile Konservierungsmittel gemäß Beispiel 1.

### Beispiel 5

Auf die in Beispiel 1 beschriebene Weise wurde die nachfolgende wäßrige Pigmentpräparation erhalten, die ebenfalls die genannten Vorteile besitzt.
32 Gew.-Teile C.I. Pigment Orange 34
12 Gew.-Teile Komponente b) aus Beispiel 1
8 Gew.-Teile eines Oxalkylierungsprodukts (ebenfalls der Komponente b), das durch Anlagerung von 2,7 Mol-Äquivalenten Styrol an 1 Mol-Äquivalent Phenol und anschließender Umsetzung von 27 Mol-Äquivalenten Ethylenoxid erhalten wurde,
8 Gew.-Teile Komponente c) aus Beispiel 1
45,9 Gew.-Teile Wasser
0,1 Gew.-Teile Konservierungsmittel gemäß Beispiel 1.

### Beispiele 6 bis 23

Analog zu Beispiel 1 wurden weitere vorteilhafte Pigmentpräparationen unter Verwendung der nachstehenden Komponenten hergestellt.

| Bsp. | C.I. Pigment | Gew.-% | Komponente* b) Gew.-% | Komponente* c) Gew.-% | Konservierungsmittel* Gew.-% | Wasser Gew.-% |
|---|---|---|---|---|---|---|
| 6 | Red 95 | 40 | 12 | 8 | 0,2 | 39,8 |
| 7 | Yellow 3 | 45 | 15 | 10 | 0,2 | 28,8 |
| 8 | Yellow 74 | 35 | 10 | 7 | 0,2 | 47,8 |
| 9 | Yellow 1 | 50 | 12 | 15 | 0,1 | 22,9 |
| 10 | Orange 5 | 40 | 12 | 10 | 0,2 | 37,8 |
| 11 | Yellow | 40 | 15 | 5 | 0,2 | 39,8 |
| 12 | Yellow 83 | 30 | 9 | 11 | 0,15 | 49,85 |
| 13 | Green 7 | 45 | 15 | 15 | 0,1 | 24,9 |
| 14 | Orange 13 | 38 | 12 | 20 | 0,05 | 29,95 |
| 15 | Orange 34 | 40 | 12 | 10 | 0,2 | 37,8 |
| 16 | Violett 23 | 25 | 15 | 12 | 0,2 | 47,8 |
| 17 | Black 1 | 25 | 12 | 13 | 0,2 | 49,8 |
| 18 | Black 7 | 45 | 8 | 25 | 0,1 | 21,9 |
| 19 | Blue 29 | 60 | 5 | 15 | - | 20,0 |
| 20 | Green 17 | 70 | 8 | 12 | - | 10,0 |
| 21 | Yellow 42 | 55 | 5 | 25 | - | 15,0 |
| 22 | Vat Red 29 | 20 | 15 | 15 | 0,2 | 49,8 |
| 23 | Blue 15:1 | 40 | 14 | 10 | 0,2 | 35,8 |
| | | | | | | |

| | | | | | | |
|---|---|---|---|---|---|---|
| *entspricht der Komponente aus Beispiel 1 | | | | | | |

## Patentansprüche

1. Wäßrige Pigmentpräparationen, enthaltend
a) 10 bis 80 Gew.-% eines Pigments,
b) 0,1 bis 20 Gew.-% eines Oxalkylierungsproduktes, das durch Anlagerung von gegebenenfalls substituierten Styrolen an gegebenenfalls substituierten Phenolen und Umsetzung mit Ethylenoxid und/oder Propylenoxid erhalten wird,
c) 2 bis 30 % eines Homo-, Co- oder Block-Co-Polyetherpolyols mit einem Siedepunkt bei Normaldruck von größer 150°C, mit einem als Zahlenmittel bestimmten mittleren Molekulargewicht von 250 bis 11000, das durch Umsetzung von Ethylenoxid und/oder Propylenoxid mit Wasser oder mit niedermolekularen Alkoholen ausgewählt aus der Gruppe bestehend aus Ethylenglycol, 1,2- oder 1,3-Propylendiol, 1,2- oder 1,4-Butandiol, Hexandiol, Glycerin und Pentaerythrit, oder mit niedermolekularen Aminen ausgewählt aus der Gruppe bestehend aus Ethylendiamin und Diethanolamin hergestellt wurde und
d) gegebenenfalls weitere Zusätze und als Rest Wasser.

2. Wäßrige Pigmentpräparationen gemäß Anspruch 1, dadurch gekennzeichnet, daß das Pigment a) anorganisch ist oder ein organisches Pigment aus der Polyazo-, Anthrachinon-, Thioindigo oder der polycyclischen Reihe, insbesondere aus der Phthalocyanin-, Chinacridon-, Dioxazin-, Naphthalintetracarbonsäure-, Perylentetracarbonsäure- oder Isoindolin-Reihe ist, ein Metallkomplex-Pigment oder einen verlackten Farbstoff wie Ca-, Mg- oder Al-Lack von Sulfonsäure- und/oder Carbonsäure-gruppenhaltigen Farbstoffen bedeutet, und daß das Oxalkylierungsprodukt der Komponente b) der Formel (I) entspricht 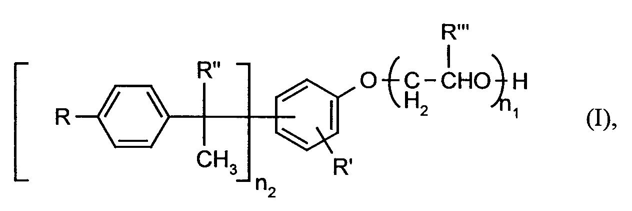 worin
R für Wasserstoff oder C₁-C₄-Alkyl, insbesondere Methyl, steht,
R' Wasserstoff, C₁-C₁₂-Alkyl, insbesondere Methyl, oder C₁-C₄-Alkoxycarbonyl, insbesondere Methoxycarbonyl, bedeutet,
R" und R"' unabhängig voneinander für Wasserstoff oder Methyl stehen,
n₁ 6 bis 40 und
n₂ 1 bis 3 bedeuten, wobei für jede der n₁-Einheiten R‴ jeweils unabhängig Wasserstoff oder Methyl bedeutet.

3. Wäßrige Pigmentpräparationen gemäß Anspruch 1, dadurch gekennzeichnet, daß das Oxalkylierungsprodukt der Komponente b) der Formel 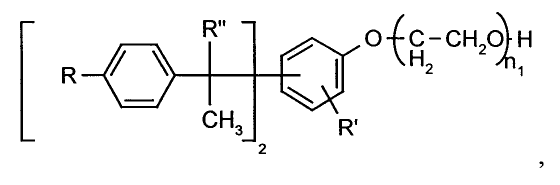 insbesondere 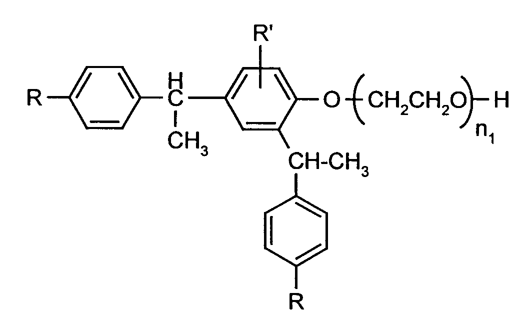 entspricht, wobei
R, R' und R" jeweils für Wasserstoff oder Methyl stehen und
n₁ 6 bis 30 bedeutet.

4. Wäßrige Pigmentpräparationen gemäß Anspruch 1, dadurch gekennzeichnet, daß das Polyetherpolyol der Komponente c) ein Polyethylenglykol und/oder ein Polypropylenglykol ist.

5. Wäßrige Pigmentpräparation gemäß Anspruch 1, dadurch gekennzeichnet, daß sie als weiteren Bestandteil ein Oxalkylierungsprodukt (Komponente e) enthält, das durch Kondensation von phenolische OH-Gruppen aufweisende Aromaten mit Formaldehyd und Aminen, die eine gegenüber Formaldehyd reaktionsfähige NH-Gruppe enthalten, erhältlich ist oder ein Derivat eines solchen Oxalkylierungsproduktes.

6. Verfahren zur Herstellung der wäßrigen Pigmentpräparationen gemäß Anspruch 1, dadurch gekennzeichnet, daß man die einzelnen Bestandteile der Präparation mit Wasser in Naßzerkleinerungsaggregaten homogenisiert.

7. Verwendung der wäßrigen Pigmentpräparationen nach Anspruch 1 zum Pigmentieren natürlicher oder synthetischer Materialien.

8. Verwendung nach Anspruch 7 zur Herstellung von Dispersionsanstrichfarben, Dispersionslacken, wasserverdünnbare Lacksysteme, wäßrige Flexo- und Tiefdruckfarben, Tapetenfarben, wäßrige Holzschutzsysteme und -Holzbeizen, Putze, sowie zum Pigmentieren von Buntstiftminen, Faserschreiber, Ink-Jet-Tinten, Tuschen, Pasten für Kugelschreiber, Kreiden, Wasch- und Reinigungsmittel, Schuhpflegemittel, Non-Woven-Vliese, Papier-Masseeinfärbungen, Papier-Streichfarben, Kartonagen-Druckfarben, Einfärbung von Latex-Produkten, Schleifmitteln, Spinnfärbungen und Folien.

## Claims

1. Aqueous pigment preparations comprising
a) 10 to 80% by weight of a pigment,
b) 0.1 to 20% by weight of an oxyalkylation product which is obtained by addition of optionally substituted styrenes onto optionally substituted phenols and reaction with ethylene oxide and/or propylene oxide,
c) 2 to 30% of a homo-, co- or block co-polyether-polyol having a boiling point under normal pressure of greater than 150°C, having a molecular weight, determined as the number-average, of 250 to 11,000, which has been prepared by reaction of ethylene oxide and/or propylene oxide with water or with low molecular weight alcohols selected from the group consisting of ethylene glycol, 1,2- or 1,3-propylenediol, 1,2- or 1,4-butanediol, hexanediol, glycerol and pentaerythritol, or with low molecular weight amines selected from the group consisting of ethylenediamine and diethanolamine, and
d) if appropriate further additives, and water as the remainder.

2. Aqueous pigment preparations according to Claim 1, characterized in that pigment a) is inorganic or is an organic pigment from the polyazo, anthraquinone, thioindigo or the polycyclic series, in particular from the phthalocyanine, quinacridone, dioxazine, naphthalenetetracarboxylic acid, perylenetetracarboxylic acid or isoindoline series, or is a metal complex pigment or a laked dyestuff, such as a Ca, Mg or Al lake of dyestuffs containing sulphonic acid and/or carboxylic acid groups, and in that the oxyalkylation product of component b) corresponds to the formula (I) 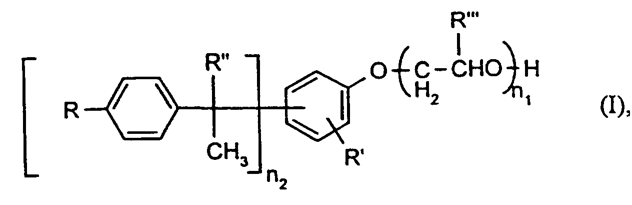 wherein
R represents hydrogen or C₁-C₄-alkyl, in particular methyl,
R' denotes hydrogen, C₁-C₁₂-alkyl, in particular methyl, or C₁-C₄-alkoxycarbonyl, in particular methoxycarbonyl,
R" and R"' independently of one another represent hydrogen or methyl,
n₁ denotes 6 to 40 and
n₂ denotes 1 to 3, wherein R"' in each case independently denotes hydrogen or methyl for each of the n₁ units.

3. Aqueous pigment preparations according to Claim 1, characterized in that the oxyalkylation product of component b) corresponds to the formula 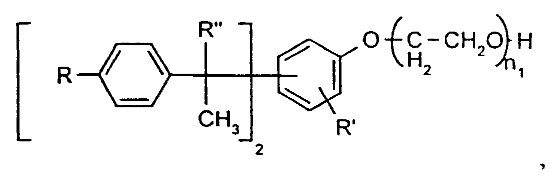 in particular 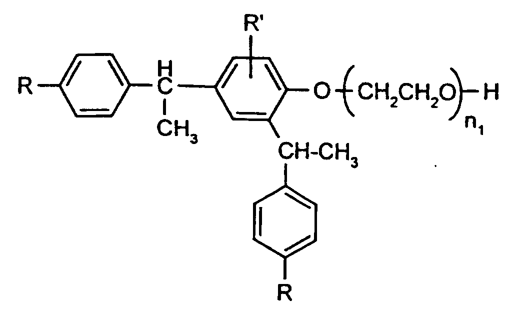 wherein
R, R' and R" in each case represent hydrogen or methyl and
n₁ denotes 6 to 30.

4. Aqueous pigment preparations according to Claim 1, characterized in that the polyether-polyol of component c) is a polyethylene glycol and/or a polypropylene glycol.

5. Aqueous pigment preparation according to Claim 1, characterized in that it comprises, as a further constituent, an oxyalkylation product (component e) which is obtainable by condensation of aromatics containing phenolic OH groups with formaldehyde and amines which contain an NH group which is reactive towards formaldehyde, or a derivative of such an oxyalkylation product.

6. Process for the preparation of the aqueous pigment preparations according to Claim 1, characterized in that the individual constituents of the preparation are homogenized with water in wet comminution units.

7. Use of the aqueous pigment preparations according to Claim 1 for pigmenting naturally occurring or synthetic materials.

8. Use according to Claim 7 for the preparation of emulsion paints, emulsion coatings, water-dilutable coating systems, aqueous flexographic and gravure printing inks, wallpaper paints, aqueous wood preservative systems and wood stains and plasters, and for pigmenting coloured pencil leads, fibre-tip pens, inkjet inks, drawing inks, pastes for ball-point pens, chalks, detergents and cleaning compositions, shoe care compositions, nonwovens, paper pulp pigmentations, paper staining colours and cardboard printing inks, and for colouring latex products, abrasives, spin-dyeing preparations and films.

## Revendications

1. Préparations aqueuses de pigments, contenant
e) 10 à 80 % en masse d'un pigment,
f) 0,1 à 20 % en masse d'un produit d'oxyalkylation qui a été obtenu par addition de styrènes éventuellement substitués sur des phénols éventuellement substitués et réaction avec de l'oxyde d'éthylène et/ou de l'oxyde de propylène,
g) 2 à 30 % en masse d'un homopolyétherpolyol, d'un copolyétherpolyol ou d'un copolyétherpolyol à blocs, ayant un point d'ébullition supérieur à 150°C sous la pression normale et une masse molaire moyenne en nombre de 250 à 11 000, qui a été préparé par réaction d'oxyde d'éthylène et/ou d'oxyde de propylène avec de l'eau ou avec des alcools de faible masse molaire choisis dans le groupe constitué par l'éthylèneglycol, le 1,2- ou 1,3-propylènediol, le 1,2- ou 1,4-butanediol, l'hexanediol, le glycérol et le pentaérythritol, ou avec des amines de faible masse molaire choisies dans le groupe constitué par l'éthylènediamine ou la diéthanolamine, et
h) éventuellement d'autres additifs, le reste étant de l'eau.

2. Préparations aqueuses de pigments selon la revendication 1, caractérisées en ce que le pigment a) est inorganique ou représente un pigment organique de la série des polyazoïques, de l'anthraquinone, du thioindigo ou des pigments polycycliques, en particulier de la série des phtalocyanines, des quinacridones, des dioxazines, des acides naphtalènetétracarboxyliques, des acides pérylènetétracarboxyliques ou des isoindolines, un pigment complexe métallique ou un colorant mis sous forme de laque comme une laque de Ca, de Mg ou d'AI de colorants contenant des groupes acide sulfonique et/ou acide carboxylique, et en ce que lé produit d'oxyalkylation du constituant b) correspond à la formule (I) 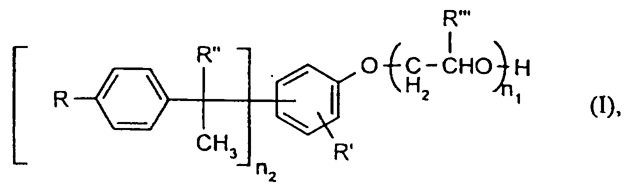 dans laquelle
R représente un atome d'hydrogène ou un groupe alkyle en C₁-C₄, en particulier méthyle,
R' représente un atome d'hydrogène ou un groupe alkyle en C₁-C₁₂, en particulier méthyle, ou (alcoxy en C₁-C₄)carbonyle, en particulier méthoxycarbonyle,
R" et R"' représentent indépendamment l'un de l'autre un atome d'hydrogène ou un groupe méthyle,
n₁ est un nombre de 6 à 40 et
n₂ est un nombre de 1 à 3, R"' représentant indépendamment un atome d'hydrogène ou un groupe méthyle pour chacune des n₁ unités.

3. Préparations aqueuses de pigments selon la revendication 1, caractérisées en ce que le produit d'oxyalkylation du constituant b) correspond à la formule 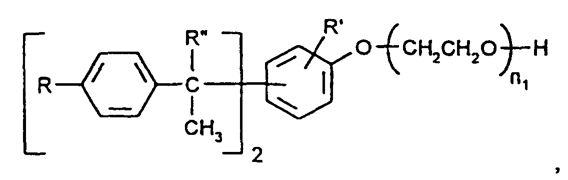 en particulier 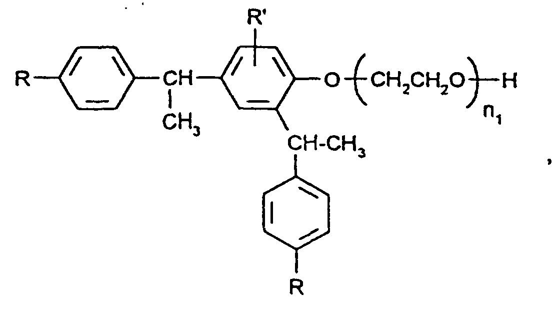 où
R, R' et R" représentent chacun un atome d'hydrogène ou un groupe méthyle, et
n₁ est compris entre 6 et 30.

4. Préparations aqueuses de pigments selon la revendication 1, caractérisées en ce que le polyétherpolyol du constituant c) est un polyéthylèneglycol et/ou un polypropylèneglycol.

5. Préparation aqueuse de pigments selon la revendication 1, caractérisée en ce qu'elle contient comme autre constituant un produit d'oxyalkylation (constituant e) qui peut être obtenu par condensation de composés aromatiques contenant des groupes OH phénoliques avec du formaldéhyde et des amines contenant un groupe NH capable de réagir avec le formaldéhyde, ou un dérivé d'un tel produit d'oxyalkylation.

6. Procédé de préparation des préparations aqueuses de pigments selon la revendication 1, caractérisé en ce que l'on homogénéise les différents constituants de la préparation avec de l'eau dans un appareil de broyage à l'eau.

7. Utilisation des préparations aqueuses de pigments selon la revendication 1 pour la pigmentation de matériaux naturels ou synthétiques.

8. Utilisation selon la revendication 7 pour la préparation de peintures à dispersion, de laques à dispersion, de systèmes de laques à diluer dans l'eau, d'encres de flexographie ou d'héliogravure, de colorants pour papiers peints, de systèmes aqueux de protection du bois et de teinture à bois, d'enduits, ainsi que pour la pigmentation de mines de crayons de couleur, de crayons feutres, d'encres pour l'impression à jet d'encre, de tissus, de pâtes pour stylos à bille, de craies, de produits de lavage et de nettoyage, de produits d'entretien des chaussures, de non-tissés, de produits de coloration de papier dans la masse, de colorants pour le couchage de papier, d'encres pour cartonnages, de systèmes de coloration de produits en latex, d'abrasifs, de colorants dans la masse de textiles et de feuilles.
